# EUROPÄISCHE PATENTSCHRIFT

(11) **EP 3 147 169 B1**
(45) Veröffentlichungstag und Bekanntmachung des Hinweises auf die Patenterteilung: **15.05.2019**
(21) Anmeldenummer: 16186618.1
(22) Anmeldetag: 31.08.2016
(51) Int. Cl.: B60W 30/10, B60W 30/14, B60W 30/02

(54) **REGLERKONFIGURATION FÜR EIN KRAFTFAHRZEUG-FAHRERASSISTENZSYSTEM**
REGULATOR CONFIGURATION FOR A MOTOR VEHICLE DRIVER ASSISTANCE SYSTEM
CONFIGURATION DE REGULATEUR POUR UN SYSTEME D'ASSISTANCE AU CONDUCTEUR D'UN VEHICULE AUTOMOBILE

(30) Priorität: 22.09.2015 DE 102015218166
(43) Veröffentlichungstag der Anmeldung: 29.03.2017
(73) Patentinhaber: Volkswagen Aktiengesellschaft, 38440 Wolfsburg (DE)
(72) Erfinder: Blumentritt, Marc, 38102 Braunschweig (DE)

(56) Entgegenhaltungen:
- DE-A1- 10 011 777
- DE-A1- 10 047 751
- DE-A1-102012 215 060
- US-A1- 2014 207 364
- I. N. Bronstein ET AL: "Taschenbuch der Mathematik" In: "Taschenbuch der Mathematik", 31 December 1989 (1989-12-31), Harri Deutsch, Thun, XP055521829, ISBN: 978-3-87144-492-0 pages 157-158, * section 2.4.4.3.3 *

## Beschreibung

Die Erfindung betrifft ein Verfahren zum Bereitstellen eines Sollwertsignals für eine Fahrerassistenzeinrichtung. Mittels des Sollwertsignals wird das Kraftfahrzeug während eines Fahrmanövers in zumindest eine Bewegungsrichtung geführt. Je nach Bewegungsrichtung ergibt sich hieraus eine Längsführung und/oder eine Querführung des Kraftfahrzeugs. Zu der Erfindung gehören auch eine Steuervorrichtung zum Durchführen des erfindungsgemäßen Verfahrens sowie ein Kraftfahrzeug mit der erfindungsgemäßen Steuervorrichtung.

In einem Kraftfahrzeug kann eine Fahrerassistenzeinrichtung bereitgestellt sein, welche autonom, also ohne ein Zutun des Fahrers, das Kraftfahrzeug entlang zumindest einer Bewegungsrichtung führen kann. Beispielsweise kann durch eine Fahrgeschwindigkeitsregelung (ACC - Automatic Cruise Control) das Kraftfahrzeug in Längsrichtung dahingehend geführt werden, dass das Kraftfahrzeug durch die Fahrerassistenzeinrichtung beschleunigt und abgebremst wird. Bei einer Querführung wird das Kraftfahrzeug durch die Fahrerassistenzeinrichtung gelenkt. Falls es sich bei dem Kraftfahrzeug um ein Flugzeug oder U-Boot handelt, kann auch eine Führung entlang der Hochachse durchgeführt werden. Die Fahrerassistenzeinrichtung regelt hierbei oftmals nur einen einzelnen Bewegungsparameter, beispielsweise die Geschwindigkeit oder die Beschleunigung oder einen Abstand, auf einen Sollwert ein, ohne dabei zu berücksichtigen, welche zeitlichen Verläufe der übrigen Bewegungsparameter sich ergeben. Daher kann es zu einem ungleichmäßigen Verlauf beispielsweise der Beschleunigung kommen, wenn eine Fahrerassistenzeinrichtung, beispielsweise ein Abbremsmanöver durchführt und dieses immer nur von aktuellen Geschwindigkeitsdaten abhängig macht. Wünschenswert wäre dagegen beispielsweise, eine Geschwindigkeit einzuregeln und hierbei auch die Strecke für den Beschleunigungsvorgang festlegen zu können und auch einen gewünschten Beschleunigungswert der Beschleunigung am Ende des Fahrmanövers einstellen zu können. Hieraus ergibt sich dann ein besonders ruckfreier oder gleichmäßiger Verlauf, der von Personen als komfortabel empfunden wird. Neben einer ACC sind als weitere Assistenzeinrichtungen, auf die das beschriebene Problem zutrifft, insbesondere ein Parkassistent, in Spurhalterassistenz, eine elektronische Stabilitätskontrolle (ESC - Electronic Stability Control) und eine Notbremsassistenz zu sehen.

Solche Assistenzeinrichtungen weisen Reglereinheiten auf, die jeweils eine Aktuatoreinheit zum Führen des Kraftfahrzeugs in einem geregelten Betrieb betreiben. Beispielsweise kann eine Reglereinheit für den Antriebsstrang, eine Reglereinheit für die Bremsanlage und eine Reglereinheit zum Einstellen eines Lenkwinkels vorgesehen sein. Diese Reglereinheiten empfangen Sollwerte, die dann eingeregelt werden.

Die DE 10 2012 215060 A1 beschreibt ein Verfahren und ein Fahrerassistenzsystem zum Führen eines Fahrzeugs, insbesondere eine Technik für eine Funktionstrennung unterschiedlicher Aufgaben beim Führen des Fahrzeugs.

Aus der US 2014/207364 A1 ist ein Verfahren zum Bestimmen einer Trajektorie für ein Kraftfahrzeug bekannt, um eine Kollision zu vermeiden oder abzuschwächen.

Der Erfindung liegt die Aufgabe zugrunde, für eine Fahrerassistenzeinrichtung ein Sollwertsignal zum Führen des Kraftfahrzeugs entlang zumindest einer Bewegungsrichtung bereitzustellen. Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Durch die Erfindung ist ein Verfahren zum Bereitstellen eines Sollwertsignals für eine Fahrerassistenzeinrichtung gegeben. Das Sollwertsignal ist zum Führen des Kraftfahrzeugs entlang zumindest einer Bewegungsrichtung während eines Fahrmanövers ausgelegt. Beispielsweise kann also das Sollwertsignal für die Fahrzeugführung in Längsrichtung und/oder Querrichtung vorgesehen sein. Um das Sollwertsignal bereitzustellen, sind die folgenden Schritte vorgesehen. Für jede Bewegungsrichtung wird jeweils für zumindest einen Bewegungsparameter des Kraftfahrzeugs eine jeweilige Endbedingung empfangen, die der Bewegungsparameter am Ende des Fahrmanövers erfüllen soll. Der zumindest eine Bewegungsparameter umfasst dabei insbesondere einen der folgenden: die Beschleunigung des Kraftfahrzeugs, die Fahrgeschwindigkeit oder kurz Geschwindigkeit, die Fahrstrecke oder kurz Strecke, die Manöverdauer und den Ruck. Der Ruck beschreibt die zeitliche Ableitung der Beschleunigung entlang der Bewegungsrichtung.

In einem weiteren Schritt werden aktuelle Sensordaten betreffend den zumindest einen Bewegungsparameter empfangen. Es werden also die Anfangsbedingungen für das Fahrmanöver ermittelt.

Auf der Grundlage der Sensordaten werden dann für jeden Bewegungsparameter, also beispielsweise die Beschleunigung und/oder die Geschwindigkeit und/oder die Strecke, jeweilige Verlaufsdaten ermittelt. Die Verlaufsdaten beschreiben jeweils einen zeitlichen Verlauf des Bewegungsparameters. Jeder Verlauf wird dabei in der Weise ermittelt, dass die jeweilige Endbedingung für den Bewegungsparameter erfüllt ist. Falls der Bewegungsparameter die Manöverdauer betrifft, ist der zeitliche Verlauf natürlich eine Gerade, der als Endwert die Manöverdauer aufweist. Um den jeweiligen Verlauf dahingehend anzupassen, dass er die jeweilige Endbedingung erfüllt, werden die jeweiligen Verlaufsdaten gemeinsam anhand eines Modells eines zeitlichen Verlaufs des Rucks ermittelt. Mit anderen Worten wird von einem zeitlichen Verlauf des Rucks ausgegangen und davon abhängig jeder weitere zeitliche Verlauf für die anderen Bewegungsparameter ermittelt.

Anhand der ermittelten Verlaufsdaten wird das Sollwertsignal erzeugt. Beispielsweise kann das Sollwertsignal direkt einen zeitlichen Verlauf beschreiben, beispielsweise den zeitlichen Verlauf der Beschleunigung oder der Geschwindigkeit, wie sie jeweils durch eine Reglereinheit eingeregelt werden kann. Das Sollwertsignal wird dann der Fahrerassistenzeinrichtung bereitgestellt.

Durch die Erfindung ergibt sich der Vorteil, dass für den gesamten Verlauf des Fahrmanövers bereits im Voraus das Sollwertsignal ermittelt wird und hierdurch kontinuierliche zeitliche Verläufe für alle Bewegungsparameter sicher gestellt werden können. Dies wird erreicht, indem alle zeitlichen Verläufe aus ein und demselben Modell hergeleitet werden, welches den Ruck beschreibt, aus welchem heraus alle anderen zeitlichen Verläufe jeweils beispielsweise auf der Grundlage einer mathematischen Integration hergeleitet werden können. Somit können alle gewünschten Randbedingungen, nämlich die Endbedingungen für das Fahrmanöver, mittels des Sollwertsignals erreicht werden und hierbei die zeitlichen Verläufe der Bewegungsparameter aufeinander abgestimmt sein.

Es wird außerdem das Problem berücksichtigt, dass durch Vorgabe nur einiger der möglichen Endbedingungen sich kein eindeutiges Sollwertsignal, sondern mehrere mögliche Sollwertsignale zum Erfüllen der vorgegebenen Endbedingungen ermitteln lassen. Um ein eindeutiges Sollwertsignal mit vorbestimmten Eigenschaften zu erhalten, ist vorgesehen, dass das Modell mehrere Ruckkoeffizienten aufweist und in Abhängigkeit davon, für wie viele Bewegungsparameter die jeweilige Endbedingung empfangen wurde, einer oder einige der Ruckkoeffizienten auf einen vorbestimmten Wert festgelegt wird. Hierdurch ergibt sich der Vorteil, dass ein eindeutiges Sollwertsignal ermittelt werden kann, das zudem bei den übrigen zeitlichen Verläufen, zu denen keine Endbedingungen vorgegeben wurden, ebenfalls zu gewünschten Eigenschaften führt, die anhand des jeweils vorbestimmten Werts des Ruckkoeffizienten festgelegt sind. Mit anderen Worten wird für jede fehlende Endbedingung oder Sollvorgabe einer der Ruckkoeffizienten auf einen Defaultwert gesetzt.

Das Sollwertsignal wird nicht nur für ein eindimensionales Fahrmanöver, sondern für Bewegungsrichtungen eines 2-dimensionalen oder eines 3-dimensionalen Fahrmanövers bereitgestellt. Beispielsweise kann also mittels des Sollwertsignals eine Längsführung und eine Querführung kombiniert werden, um beispielsweise ein Überholmanöver mit einer Fahrzeugbeschleunigung und einem Spurwechsel durchzuführen. Hierbei besteht nun das Problem, dass die zeitlichen Verläufe für die Bewegungsparameter in Längsrichtung koordiniert werden müssen mit den zeitlichen Verläufen der Bewegungsparameter für die Querführung, damit derjenige Teil des Sollwertsignals, der die Längsführung betrifft und derjenige Teil, der die Querführung betrifft, aufeinander abgestimmt sind. Um hierzu mit einfachen Berechnungsmethoden ein Sollwertsignal zu erhalten, werden zunächst für die eine der Bewegungsrichtungen, beispielsweise die Längsrichtung, die Verlaufsdaten ermittelt, daraus eine Manöverdauer des Fahrmanövers ermittelt und dann für jede verbleibende der Bewegungsrichtungen die Verlaufsdaten in Abhängigkeit von der Manöverdauer ermittelt. Hierdurch ist sichergestellt, dass die Längsbewegung und die Querbewegung gleich lang dauern. Genauso können auch für ein 3-dimensionales Fahrmanöver zunächst die Verlaufsdaten für eine erste Bewegungsrichtung ermittelt werden und dann nacheinander auf Grundlage der ermittelten Manöverdauer die Verlaufsdaten für die verbleibenden beiden Bewegungsrichtungen.

Zu der Erfindung gehören auch optionale Weiterbildungen, durch deren Merkmale sich zusätzliche Vorteile ergeben.

Eine Weiterbildung sieht vor, dass der zeitliche Verlauf des Rucks durch das Modell als knickfreier Verlauf modelliert wird. Mit anderen Worten ist der zeitliche Verlauf des Rucks durch das Modell als stetiger und stetig differenzierbarer Verlauf oder Graph beschrieben. Hierdurch ergibt sich der Vorteil, dass auch alle anhand des Modells ermittelten übrigen zeitlichen Verläufe der Bewegungsparameter, beispielsweise der Beschleunigung und/oder der Geschwindigkeit und/oder der Strecke, knickfrei, das heißt stetig und stetig differenzierbar sind. Dies führt zu einem besonders ruhigen und/oder ruckelfreien Fahrverhalten des Kraftfahrzeugs, während dieses durch die Fahrerassistenzeinrichtung geführt wird.

Eine Weiterbildung sieht vor, dass der Fahrerassistenzeinrichtung nicht nur das Sollwertsignal bereitgestellt wird, sondern auch die jeweiligen Verlaufsdaten des ermittelten zeitlichen Verlaufs des zumindest eines Bewegungsparameters. Falls nicht für jeden möglichen Bewegungsparameter, also die Beschleunigung, Geschwindigkeit, Strecke, Manöverdauer und den Ruck, eine Endbedingung vorgegeben wird, können auch Verlaufsdaten eines jeweiligen zeitlichen Verlaufs eines weiteren Bewegungsparameters, zu welchem also keine Endbedingung vorgegeben wurde, ebenfalls bereitgestellt werden. Auch diese zeitlichen Verläufe können anhand des Modells ermittelt werden. Zusätzlich oder alternativ dazu kann auch ein Zeitwert der Dauer des Manövers, also die Manöverdauer, bereitgestellt werden. Durch diese Weiterbildung ergibt sich der Vorteil, dass die Fahrerassistenzeinrichtung überprüfen kann, ob das bereitgestellte Sollwertsignal vorbestimmte Randbedingungen verletzt, die durch die Fahrerassistenzeinrichtung vorgegeben sein können. Beispielsweise kann durch die Fahrerassistenzeinrichtung überprüft werden, ob eine Reglereinheit oder eine Aktuatoreinrichtung, beispielsweise eine Bremse, durch das Sollwertsignal überlastet werden würde.

Ein geeignetes Modell, mittels welchem diese beschriebene Weiterbildung besonders vorteilhaft realisiert werden kann, sieht gemäß einer Weiterbildung ein Polynom vor, welches den Ruck R (t) über der Zeit t mit den Ruckkoeffizienten R0, R1, R2, R3 und R4 beschreibt, wobei der Ruck durch folgende Formel beschrieben ist: R(t) = R0 + R1 t + R2 t² + R3 t³ + R4 t⁴. Durch Integration lässt sich aus diesen Polynom ein jeweiliger zeitlicher Verlauf für die Beschleunigung A (t), die Geschwindigkeit V (t) und die Strecke S (t) ermitteln. Hieraus ergibt sich ein Gleichungssystem. Der Ruckkoeffizient R0 stellt den Ruck zu Beginn des Fahrmanövers dar. Er ergibt sich durch die Sensordaten als Messwert. Zu Beginn eines Manövers kann der Ruck ungleich 0 sein, was somit im Modell berücksichtigt wird. Ein ruckfreier Beginn des Manövers ist natürlich wünschenswert, aber wenn gerade zu Beginn des Fahrmanöver bereits eine Beschleunigung aufgebaut wird, sich die Beschleunigung also ändert, ist auch der Ruck ungleich 0. Das kann im Modell berücksichtigt werden, wenn R0 gemessen wird. Die übrigen, aus der Integration resultierenden Integrationskonstanten für Beschleunigung A0 und Geschwindigkeit V0 ergeben sich ebenfalls als aktuelle Messwerte aus den Sensordaten. S0 kann als 0 angenommen werden (Beginn der Fahrmanöverstrecke). Wenn während des Fahrmanövers aber eine Korrektur vorgenommen werden soll, kann entweder die verbleibende Reststrecke als neuer Endwert (mit S0=0) oder die bereits gefahrene Strecke als S0 (mit unverändertem Endwert der Strecke) verwendet werden. Der Ruck sollte bevorzugt vor allen Dingen am Ende des Manövers auf 0 gehen, um möglichst komfortable Fahrmanöver zu realisieren.

Es verbleiben somit vier unbekannte, nämlich die Ruckkoeffizienten R1, R2, R3 und R4. Gibt man für den Ruck, die Beschleunigung, die Geschwindigkeit und die Strecke jeweils eine Endbedingung vor, so lässt sich das Gleichungssystem für die Ruckkoeffizienten lösen. Fehlt eine der Endbedingungen, so kann entsprechend ein Ruckkoeffizient auf einen Defaultwert oder kurz Wert eingestellt werden, beispielsweise den Wert 0.

Der beschrieben Beschleunigungsverlauf A(t), Geschwindigkeitsverlauf V(t) und Streckenverlauf S(t) muss hierbei nicht jedes Mal durch eine Integration ermittelt werden. Vielmehr lassen sich die Bewegungsgleichungen im Voraus ermitteln, sodass eine Weiterbildung vorsieht, dass jeder Verlauf anhand einer vorbestimmten, von dem Modell abhängigen Bewegungsgleichung definiert ist. Hierdurch ergibt sich der Vorteil, dass eine Recheneinrichtung zum Ermitteln der Verlaufsdaten verwendet werden kann, die nur eine verhältnismäßig geringe Rechenleistung bereitstellen muss. Bei den Verlaufsdaten kann es sich im Zusammenhang mit der Erfindung um Daten handeln, die den Graphen des Verlaufs beschreiben. Es kann sich aber auch um Parameter handeln, welche den Verlauf nur indirekt beschreiben. Beispielsweise kann es sich um Koeffizienten eines Polynoms handeln.

Eine Weiterbildung berücksichtigt, dass die Bewegungsgleichungen nicht immer eindeutig gelöst werden können, weil beispielsweise eine Quadratwurzel berechnet werden muss, für die es einen positiven und einen negativen Lösungswert gibt. Bei dieser Weiterbildung wird überprüft, ob die Verlaufsdaten zumindest ein vorbestimmtes Plausibilitätskriterium verletzen. Bei verletzten Plausibilitätskriterium wird das Sollwertsignal unterdrückt, d. h. das Fahrmanöver wird nicht auf Grundlage dieses Sollwertsignals durchgeführt. Das zumindest eine Plausibilitätskriterium kann insbesondere angeben, dass stets eine positive Fahrstrecke und/oder keine negative Geschwindigkeit und/oder kein Fahrtrichtungswechsel und/oder ein physikalisch durch die Fahrerassistenzeinrichtung durchführbares Fahrmanöver beschrieben sein muss.

Eine Weiterbildung ermöglicht es auch bei unterdrücktem Sollwertsignal, ein Fahrmanöver durchzuführen. Diese Weiterbildung sieht vor, bei verletztem Plausibilitätskriterium die zumindest eine Endbedingung zu verändern und neue Verlaufsdaten zu ermitteln. Durch Anpassen der zumindest einen Endbedingung oder Randbedingung wird also ein neues Sollwertsignal auf der Grundlage der neuen Verlaufsdaten ermittelt, zu dem dann wieder überprüft werden kann, ob es jedes Plausibilitätskriterium erfüllt.

Wie bereits ausgeführt, kann es sich bei dem Sollwertsignal direkt um die Verlaufsdaten für einen oder mehrere der zeitlichen Verläufe handeln, beispielsweise die Beschleunigung und/oder die Geschwindigkeit. Falls die zumindest eine Bewegungsrichtung eine Querrichtung für eine Lenkbewegung des Kraftfahrzeugs umfasst, also ein Lenkmanöver, so muss dagegen das Sollwertsignal einen Sollwert für einen Lenkwinkel umfassen. Um diesen aus Verlaufsdaten herzuleiten, sieht eine Weiterbildung vor, dass die Verlaufsdaten für die Querbewegung für einen einzelnen Punkt des Kraftfahrzeugs ermittelt werden und aus den Verlaufsdaten das Sollwertsignal mittels eines Einspurmodells des Kraftfahrzeugs erzeugt wird. Durch das Einspurmodell wird also die Bewegung des Punktes angepasst an die durch das Kraftfahrzeug überhaupt durchführbaren Lenkbewegungen. Das Einspurmodell für ein Kraftfahrzeug ist an sich aus dem Stand der Technik bekannt.

Eine Weiterbildung betrifft das eigentliche Umsetzen des Sollwertsignals in die Fahrzeugführung. Diese Weiterbildung sieht vor, dass die Fahrerassistenzeinrichtung eine jeweilige Reglereinrichtung für einen Regelbetrieb einer jeweiligen Aktuatoreinrichtung zum Führen des Kraftfahrzeugs entlang der jeweiligen Bewegungsrichtung aufweist. Als Aktuatoreinrichtung kann beispielsweise ein Antriebsstrang für einen Antriebsmomentaufbau vorgesehen sein. Als eine Aktuatoreinrichtung eine Bremsanlage für einen Bremsmomentaufbau bereitgestellt sein. Zum Querführen des Kraftfahrzeugs kann eine elektromechanische Lenkeinrichtung als Aktuatoreinrichtung vorgesehen sein. Das bereitgestellte Sollwertsignal erhält je nach Fahrmanöver für jede Reglereinrichtung einen Sollwert für unterschiedliche Zeitpunkte des Manövers. Diese werden in der jeweiligen Reglereinrichtung eingestellt. Somit bewegt sich das Kraftfahrzeug während des Fahrmanövers gemäß dem ermittelten Sollwertsignal.

Zu der Erfindung gehört auch eine Steuervorrichtung für ein Kraftfahrzeug, wobei die Steuervorrichtung dazu eingerichtet ist, Sensordaten betreffend zumindest einen Bewegungsparameter einer Fahrzeugbewegung entlang zumindest einer Bewegungsrichtung des Kraftfahrzeugs zu empfangen. Des Weiteren ist die Steuervorrichtung dazu eingerichtet, eine jeweilige Endbedingung, die der jeweilige Bewegungsparameter am Ende eines Fahrmanövers erfüllen soll, zu empfangen. Die Steuervorrichtung ist des Weiteren dazu eingerichtet, auf der Grundlage der empfangenen Sensordaten und jeder empfangenen Endbedingung eine Ausführungsform des erfindungsgemäßen Verfahrens durchzuführen. Hierdurch stellt die Steuervorrichtung dann ein Sollwertsignal bereit, auf dessen Grundlage am Ende des Fahrmanövers die vorgegebenen Endbedingungen erfüllt werden können. Hierbei ist sichergestellt, dass die zeitlichen Verläufe aller möglichen Bewegungsparameter des Kraftfahrzeugs aufeinander abgestimmt sind, da sie gemeinsam anhand des Modells für den zeitlichen Verlauf des Rucks ermittelt werden.

Die Steuervorrichtung ist dazu eingerichtet, das Sollwertsignal nicht nur für ein eindimensionales Fahrmanöver, sondern für Bewegungsrichtungen eines 2-dimensionalen oder eines 3-dimensionalen Fahrmanövers bereitzustellen werden. Die Steuervorrichtung ist dazu eingerichtet, für die eine der Bewegungsrichtungen, beispielsweise die Längsrichtung, die Verlaufsdaten zu ermittelen, daraus eine Manöverdauer des Fahrmanövers zu ermitteln und dann für jede verbleibende der Bewegungsrichtungen die Verlaufsdaten in Abhängigkeit von der Manöverdauer zu ermitteln. Genauso können durch die Steuervorrichtung auch für ein 3-dimensionales Fahrmanöver zunächst die Verlaufsdaten für eine erste Bewegungsrichtung ermitteln und dann nacheinander auf Grundlage der ermittelten Manöverdauer die Verlaufsdaten für die verbleibenden beiden Bewegungsrichtungen.

Die Steuervorrichtung kann als zentrale Steuervorrichtung bereitgestellt sein, was den Vorteil bietet, dass mehrere Fahrerassistenzeinrichtungen die Steuervorrichtung zum Ermitteln eines jeweiligen Sollwertsignals nutzen können. Alternativ dazu kann die Steuervorrichtung in einer einzelnen Fahrerassistenzeinrichtung bereitgestellt sein, die dann für sich das benötigte Sollwertsignal ermittelt. Die Steuervorrichtung kann auf der Grundlage einer Prozessoreinrichtung, beispielsweise eines Mikrocontrollers oder Mikroprozessors, bereitgestellt werden.

Schließlich gehört zu der Erfindung auch ein Kraftfahrzeug. Das erfindungsgemäße Kraftfahrzeug weist eine Sensoreinrichtung zum Erzeugen von Sensordaten betreffend zumindest einen Bewegungsparameter einer Fahrzeugbewegung des Kraftfahrzeugs entlang zumindest einer Bewegungsrichtung auf. Beispielsweise kann also die Sensoreinrichtung einen Beschleunigungssensor und/oder einen Geschwindigkeitssensor und/oder einen Wegsensor aufweisen. Das Fahrzeug weist des Weiteren eine Fahrerassistenzeinrichtung zum Führen des Kraftfahrzeugs entlang der zumindest einen Bewegungsrichtung in einem Fahrmanöver auf. Bei der Fahrerassistenzeinrichtung kann es sich in der beschriebenen Weise um ein ACC, einen Parkassistenten, ein ESC oder einen Notbremsassistenten handeln. Das Kraftfahrzeug kann auch mehrere Fahrerassistenzeinrichtungen aufweisen. Das erfindungsgemäße Kraftfahrzeug weist eine Ausführungsform der erfindungsgemäßen Steuervorrichtung auf, wobei die zumindest eine Fahrerassistenzeinrichtung dazu eingerichtet ist, zum Planen des Fahrmanövers eine jeweilige Endbedingung für den zumindest einen Bewegungsparameter an die Steuervorrichtung auszusenden und von der Steuervorrichtung ein Sollwertsignal für zumindest eine Reglereinrichtung für einen Regelbetrieb einer jeweiligen Aktuatoreinrichtung zum Führen des Kraftfahrzeugs entlang der jeweiligen Bewegungsrichtung zu empfangen und das Sollwertsignal in jeder Reglereinrichtung einzustellen. Wie bereits ausgeführt, kann es sich bei dem Sollwertsignal also um eine Kombination von Sollwerten für jede der Reglereinrichtungen handeln.

Das erfindungsgemäße Kraftfahrzeug ist bevorzugt als Kraftwagen, insbesondere als Personenkraftwagen oder Lastkraftwagen, ausgestaltet. Bei dem Kraftfahrzeug kann es sich aber auch beispielsweise um ein Motorrad oder ein Flugzeug oder ein Boot handeln.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs,
- Fig. 2: eine schematische Darstellung einer Steuervorrichtung und einer Fahrerassistenzeinrichtung, die in dem Kraftfahrzeug von Fig. 1 bereitgestellt sein können,
- Fig. 3: eine Skizze zur Veranschaulichung eines Modells, das in der Steuervorrichtung von Fig. 2 bereitgestellt sein kann,
- Fig. 4: schematisierte zeitliche Verläufe von Bewegungsparametern des Kraftfahrzeugs, wie sie sich bei einer Ausführungsform des erfindungsgemäßen Verfahrens für ein erstes Fahrmanöver ergeben können,
- Fig. 5: schematisierte zeitliche Verläufe von Bewegungsparametern des Kraftfahrzeugs, wie sie sich bei einer Ausführungsform des erfindungsgemäßen Verfahrens für ein zweites Fahrmanöver ergeben können.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

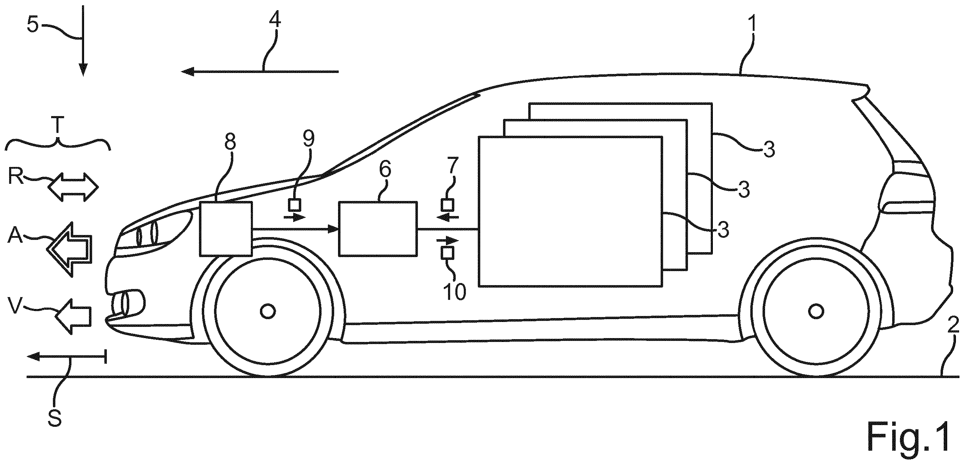

Fig. 1 zeigt ein Kraftfahrzeug 1, bei dem es sich beispielsweise um einen Kraftwagen, insbesondere um einen Personenkraftwagen oder Lastkraftwagen, handeln kann. Das Kraftfahrzeug 1 kann in dem veranschaulichten Beispiel beispielsweise auf einer Straße 2 fahren. Dabei wird das Kraftfahrzeug 1 in dem Beispiel durch eine Fahrerassistenzeinrichtung 3 oder mehrere Fahrerassistenzeinrichtungen 3 geführt. Fig. 1 veranschaulicht ein Beispiel, bei welchem durch eine einzelne Fahrerassistenzeinrichtung 3 das Kraftfahrzeug 1 entlang einer Längsrichtung 4 geführt wird. Die Längsrichtung 4 repräsentiert eine Bewegungsrichtung. Zur Veranschaulichung der Erfindung reicht es aus, lediglich die Führung des Kraftfahrzeugs 1 entlang einer Bewegungsrichtung, hier beispielhaft der Längrichtung 4, zu beschreiben.

Die Fahrerassistenzeinrichtung 3 plant ein Fahrmanöver 5, durch welches das Kraftfahrzeug 1 mit einer Beschleunigung A beschleunigt wird und sich hierdurch eine Geschwindigkeit V ändert, während das Kraftfahrzeug 1 eine Strecke S fährt. Das Fahrmanöver 5 dauert hierbei insgesamt eine Manöverdauer T. Durch die Änderung der Beschleunigung A kann sich ein Ruck R ergeben, der von einer Person im Kraftfahrzeug 1 gespürt werden kann. Der Ruck R, die Beschleunigung A, die Geschwindigkeit V, die Strecke S und die Manöverdauer T stellen jeweils einen Bewegungsparameter dar.

In dem veranschaulichten Beispiel wird davon ausgegangen, dass das Kraftfahrzeug 1 beschleunigt werden soll, weil die Fahrerassistenzeinrichtung 3 beispielsweise ein Überholmanöver plant. Zum Planen des Fahrmanövers 5 weist das Kraftfahrzeug 1 eine Steuervorrichtung 6 auf, die in dem veranschaulichten Beispiel als zentrale Steuervorrichtung bereitgestellt ist, die außerhalb des Fahrerassistenzsystems 3 bereitgestellt ist. Die Steuervorrichtung 6 kann auch in ein Fahrerassistenzsystem 3 integriert sein. Zum Planen des Fahrmanövers 5 sendet die Fahrerassistenzeinrichtung 3 Endbedingungen 7 an die Steuervorrichtung 6 aus. Die Endbedingungen 7 beschreibt für eine oder mehrere der Bewegungsparameter Ruck R, Beschleunigung A, Geschwindigkeit V, Strecke S, Manöverdauer T eine Endbedingung oder Randbedingung, die am Ende des Fahrmanövers 5 erfüllt sein soll.

Die Steuervorrichtung 6 empfängt von einer Sensoreinrichtung 8 Sensordaten 9, die zu den Bewegungsparametern R, A, V, S, T oder zumindest einigen dieser Bewegungsparameter jeweils aktuelle Werte enthalten. Auf Grundlage der Sensordaten 9 und der Endbedingungen 7 ermittelt die Steuervorrichtung 6 ein Sollwertsignal 10, das für die Dauer des Fahrmanövers 5 Sollwerte für zumindest eine Reglereinheit der Fahrerassistenzeinrichtung 3 enthält.

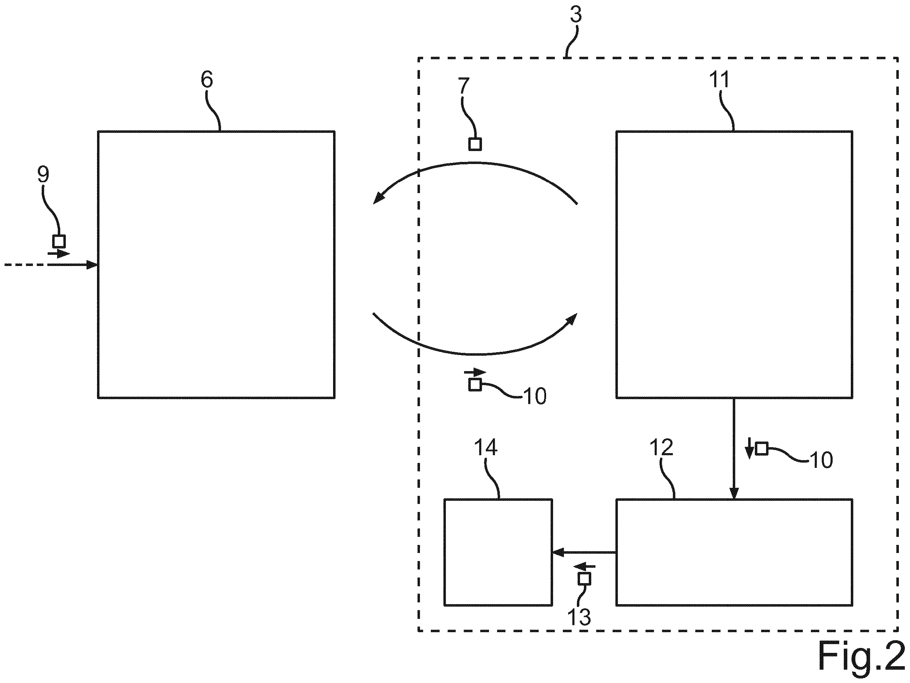

In Fig. 2 ist die Manöverplanung noch einmal genauer erklärt. Dargestellt sind die Steuervorrichtung 6 und die Fahrerassistenzeinrichtung 3. Die Fahrerassistenzeinrichtung 3 kann eine Steuereinheit 11 aufweisen, durch welche das Fahrmanöver 5 geplant wird. Mittels des empfangenen Sollwertsignals 10 kann die Steuereinheit 11 eine Reglereinrichtung 12 dahingehend steuern, dass zu jedem Zeitpunkt des Fahrmanövers 5 ein Sollwert für den Regler der Reglereinrichtung 12 bereitsteht. Die Reglereinrichtung 12 kann beispielsweise eine Fahrgeschwindigkeitsregelung für die Fahrgeschwindigkeit V oder die Beschleunigung A sein. Die Reglereinrichtung 12 stellt mittels eines Stellsignals 13 eine Aktuatoreinrichtung 14, also beispielsweise den Antriebsstrang und/oder die Bremsanlage des Kraftfahrzeugs 1.

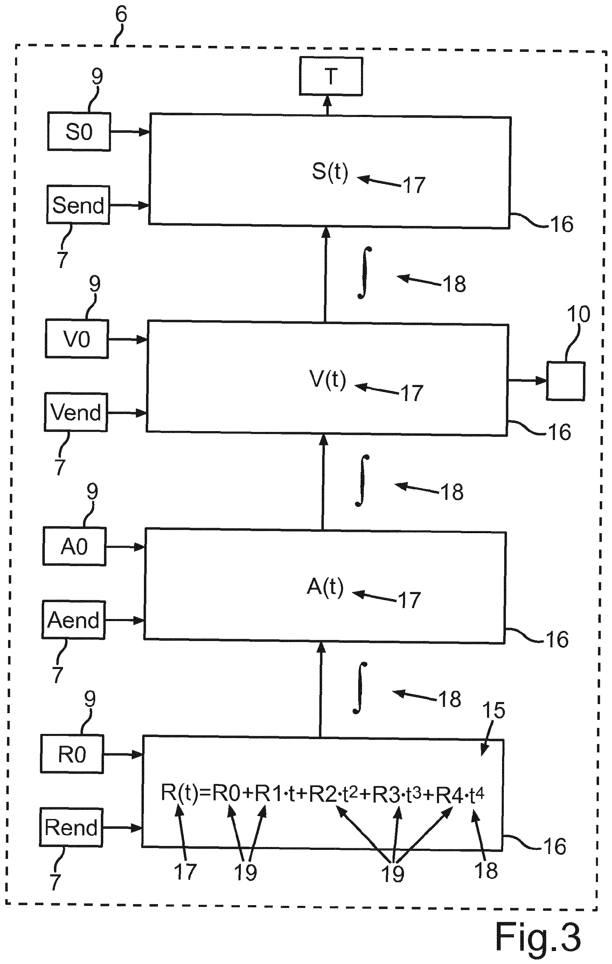

Fig. 3 veranschaulicht, wie durch die Steuervorrichtung 6 das Sollwertsignal 10 ermittelt werden kann. Fig. 3 zeigt, wie die Sensordaten 9 jeweilige Anfangsbedingungswerte der Strecke S0, Geschwindigkeit V0, Beschleunigung A0 und/oder des Rucks R0 umfassen können. Entsprechend kann für die Endbedingungen 7 ein jeweiliger Endwert für die Strecke Send, die Geschwindigkeit Vend, die Beschleunigung Aend, den Ruck Rend oder nur einige davon vorgegeben werden. Die Steuervorrichtung 6 ermittelt auf der Grundlage eines Modells 15 jeweilige Verlaufsdaten 16, die einen jeweiligen zeitlichen Verlauf 17 für den Ruck R(t), die Beschleunigung A(t), die Geschwindigkeit V(t) und/oder die Strecke S(t) beschreiben oder festlegen können. Ausgehend von dem Modell 15 für den zeitlichen Verlauf 17 des Rucks R(t) kann durch eine jeweilige mathematische Integration 18 der jeweils nächste zeitliche Verlauf für die Beschleunigung A(t), die Geschwindigkeit V(t) und die Strecke S(t) ermittelt werden. Des Weiteren kann auch die Manöverdauer T ermittelt werden. In dem in Fig. 3 veranschaulichten Beispiel umfasst das Modell 15 ein Polynom 18, durch welches Ruckkoeffizienten 19 (R0, R1, R2, R3, R4) gegeben sind.

Mittels des Modells 15 kann z.B. nach einer vorgegebenen Strecke Send eine definierte Geschwindigkeit Vend erreicht werden, was über die Beschleunigung A geregelt werden soll, wobei Strecke S UND Geschwindigkeit V beachtet werden. Würde nur die Geschwindigkeit V in die Regelung einfließen, dann ist die Sollstrecke nicht bzw. nur durch Zufall einhaltbar.

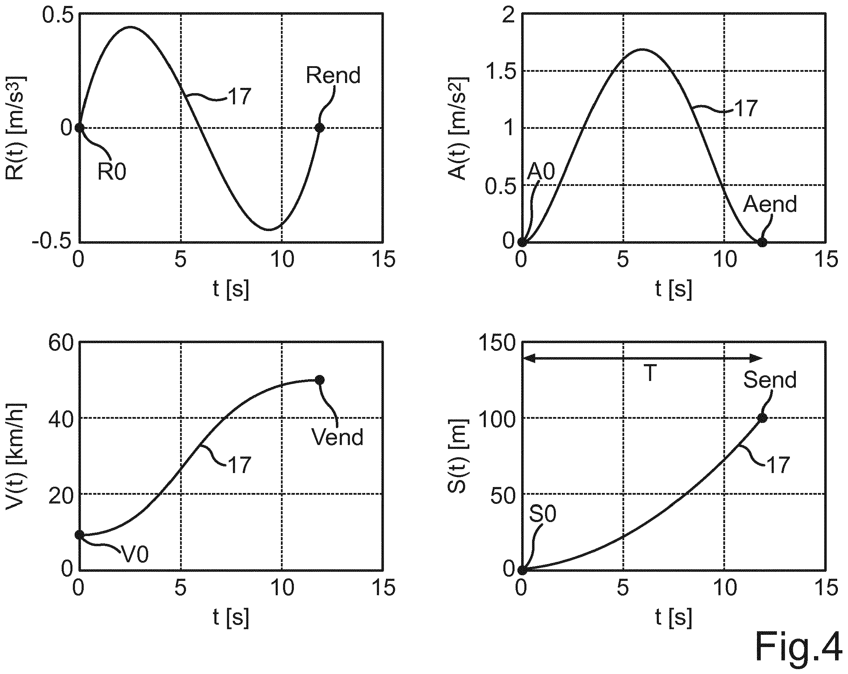

Fig. 4 veranschaulicht hierzu die zeitlichen Verläufe 17, wie sie sich für eine Beschleunigung des Kraftfahrzeugs 1 von 10 km/h auf 50 km/h über 100 m in 12 Sekunden ergeben können.

Das Fahrmanöver 5 ist hierbei dahingehend ideal, dass alle zeitlichen Verläufe 17 stetig und stetig differenzierbar sind, also knickfrei.

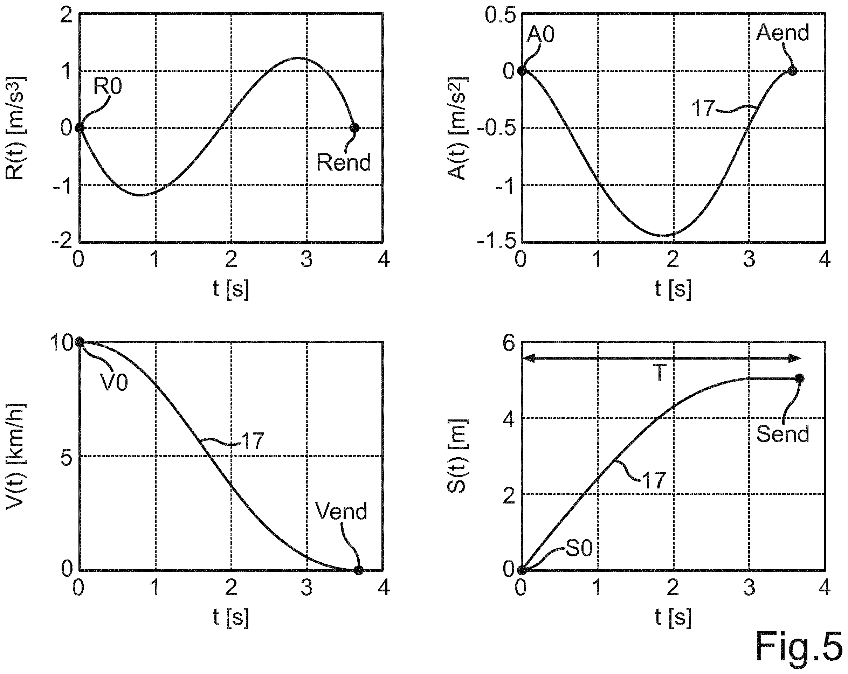

Fig. 5 veranschaulicht ein Fahrmanöver für ein Anhalten des Kraftfahrzeugs 1 aus 10 km/h Fahrgeschwindigkeit über 5 m in 3,5 Sekunden. Auch in diesem Fall sind die Verläufe 17 knickfrei.

Die zeitlichen Verläufe 17 müssen nicht aufwendig durch eine numerische Integration ermittelt werden, sondern sie können als jeweilige Bewegungsgleichung in der Steuervorrichtung 6 gespeichert sein oder hinterlegt sein. Es können also analytische Lösungen vorbereitet oder vorgegeben sein. Die Bewegungsgleichungen für Strecke S, Geschwindigkeit V, Beschleunigung A und Ruck R sind alle nämlich über bekannte Integralrechnung bzw. Ableitung miteinander verkoppelt.

Somit kann für die Berechnung von idealen (d.h. stetigen) Fahrmanövern 5 zwischen zwei Punkten (Start- und Endpunkt sind jeweils definiert durch Position (bzw. Fahrstrecke S), Geschwindigkeit V, Beschleunigung A und Ruck R des Fahrzeugs 1) mit einer vorgegebenen Zeitdauer T des Fahrmanövers 5 ein Gleichungssystem aufgestellt werden, dass für alle 4 Bewegungsparameter oder Bewegungsgrößen R, A, V, S eindeutig lösbar ist. Als Lösungsansatz wird der Ruck R als Polynom vierter Ordnung (bezogen auf die Zeit) mit den fünf Ruckkoeffizienten R0 bis R4 modelliert oder beschrieben, wobei R0 dem Ruck R zu Beginn des Fahrmanövers 5 entspricht. Die vier verbleibenden Ruckkoeffizienten R1 bis R4 werden berechnet. Dazu werden zunächst die Gleichungen für die drei weiteren Bewegungsgrößen A, V, S wie folgt ermittelt. Die Beschleunigung A ergibt sich aus dem Integral des Rucks R über der Zeit t, die Geschwindigkeit V aus dem Integral der Beschleunigung A über der Zeit t und die Strecke S aus dem Integral der Geschwindigkeit V über der Zeit t. Mit den Startbedingungen aus den Sensordaten 9 und Endbedingungen 7 der Bewegungsgrößen R, A, V, S sowie der Zeitdauer T des Fahrmanövers 5 lassen sich vier Gleichungen erstellen, mit denen die vier Ruckkoeffizienten R1 bis R4 eindeutig lösbar sind.

Eine vollständige Vorgabe der Endbedingungen 7 sowie der Zeitdauer T des Fahrmanövers 5 ist nicht immer gegeben (Startbedingungen sind immer vollständig durch die Sensordaten 9 gegeben). Es kann z.B. sein, dass keine Vorgabe für die Zeitdauer T eines Fahrmanövers 5 gegeben wird (z.B. für einen Parkvorgang, bei dem die Dauer T des Fahrmanövers 5 nicht entscheidend ist). Durch die Steuervorrichtung 6 kann eine ideale Zeitdauer T für das Fahrmanöver 5 ermittelt werden, indem einer der Ruckkoeffizienten (z.B. R4) gleich Null gesetzt und nach der Zeitdauer T des Fahrmanövers 5 aufgelöst wird. Werden zwei Endbedingungen 7 nicht vorgegeben (z.B. beim Beschleunigen auf eine gewünschte Zielgeschwindigkeit Vend wird keine Zeitdauer T und Strecke Send des Fahrmanövers 5 vorgegeben), werden zwei Ruckkoeffizienten gleich Null gesetzt.

Sind alle Ruckkoeffizienten R1-R4 berechnet, lassen sich aus den Bewegungsgleichungen ideale Verläufe 17 für die Bewegungsgrößen R, A, V, S bzw. das Fahrmanöver 5 berechnen. Diese dienen als Sollvorgaben 10 für eine Längsregelung des Fahrzeugs 1.

Bei der Berechnung der Fahrmanöver 5 müssen einige Sonderfälle berücksichtigt werden: immer eine positive Fahrstrecke, keine negative Geschwindigkeit (was einem Rückwärtsfahren entspricht), nur reelle Lösungen und die Grenzen des physikalisch Machbaren. Die Fahrstrecke wird immer positiv betrachtet, auch wenn Rückwärts gefahren wird. Fahrtrichtungswechsel während des Fahrmanövers sind nicht zulässig. Eine negative Geschwindigkeit kann theoretisch resultieren, wenn in den Startbedingungen eine Verzögerung nahe Null km/h Fahrzeuggeschwindigkeit vorgegeben wird (es wird also vor dem Fahrmanöver gerade in den Stillstand gebremst) und das Fahrzeug durch das Manöver wieder beschleunigt werden soll. In diesem Fall wird die anliegende Verzögerung nicht sprunghaft auf Beschleunigung umgeschaltet (da ideale, stetige Bewegungsverläufe), so dass während des Abbaus der Verzögerung die Geschwindigkeit des Fahrzeugs weiter reduziert wird. Dies kann theoretisch in negative Fahrzeuggeschwindigkeit resultieren. In der Praxis würde das Fahrzeug in den Stillstand gebremst werden. Wird die Zeitdauer des Fahrmanövers aus einem zu Null gesetzten Ruckkoeffizienten berechnet, müssen je nach weiteren Randbedingungen kubische oder quadratische Gleichungen gelöst werden. Lässt sich keine reelle Lösung finden (z.B. wegen negativem Term unter einer Quadratwurzel), müssen die Randbedingungen angepasst werden. Normalerweise bedeutet dies eine Reduzierung der Strecke des Fahrmanövers. Die Grenzen des physikalisch machbaren werden erreicht, wenn Beschleunigungen (inklusive Verzögerungen) und Fahrzeuggeschwindigkeit zu große Werte annehmen. Wird z.B. die Strecke des Fahrmanövers zu kurz gewählt (soll z.B. aus 100km/h bis in den Stillstand auf einem Meter gebremst werden), resultieren zu große Soll-Verzögerungen.

Zur Anwendung der Berechnung der idealen Fahrmanöver und der Längsregelung der berechneten Sollvorgaben 10 ist im Fahrzeug 1 ein System installiert, das bevorzugt die folgenden Vorgaben erfüllt:
1. Sensoreinheit 8 mit Sensoren und mit Steuergerät zur Erfassung und Berechnung der Eigenbewegung des Fahrzeugs 1 in Form der Bewegungsgrößen. Die Sensoren sind insbesondere in der Lage, die Fahrstrecke S sowie Geschwindigkeit V, Beschleunigung A und Ruck R des Fahrzeugs 1 zu bestimmen. Hierfür können z.B. Radrehzahlsensoren und Längsbeschleunigungssensor genutzt werden.
2. Aktuatoreinrichtung in Form des Antriebsstrangs mit aktivem (über eine Steuereinheit steuerbaren) Antriebsmomentaufbau (inklusive aktiver (über ein Steuergerät steuerbarer) Gangwahl).
3. Aktuatoreinrichtung in Form der Bremsanlage mit aktivem (über ein Steuergerät steuerbaren) Bremsmomentaufbau (kann auch z.B. über Rekuperation erfolgen).
4. die Steuervorrichtung 6, die die Eigenbewegung des Fahrzeugs (erfasst über Sensordaten 9) und den vorgegebenen Randbedingungen 7 für das Fahrmanöver 5 verarbeitet und die berechneten Sollvorgaben 10 zur Längsregelung an eine Regelungseinheit 12 weitergibt.
5. die Regelungseinheit 12, die das Fahrverhalten des Fahrzeugs anhand dessen Eigenbewegung (erfasst über Sensordaten) und den berechneten Sollvorgaben 10 unter Verwendung der Fahrzeugaktuatoren (Antriebsstrand und Bremsanlage) regelt.

Für die Bestimmung der vorgegebenen Randbedingungen 7 des Fahrmanövers 5 werden ebenfalls eine Steuereinheit 11 und ggf. Sensoren benötigt. Diese liegen aber außerhalb der Steuervorrichtung 6 zur Berechnung und Umsetzung von idealen Fahrmanövern. Die in der Aufzählung genannten Steuergeräte bzw. Regelungseinheit sind als logische Elemente zu verstehen. In der realen Umsetzung können diese in einem oder mehreren Steuergeräten integriert werden.

Das beschriebene Verfahren der Steuervorrichtung 6 lässt sich auch auf 2-Dimensionale Fahrmanöver übertragen (also Längs- und Querrichtung). Dazu werden zunächst die Bewegungsgleichungen in einer Dimension (z.B. in Längsrichtung) gelöst. Ist die Dauer T des Fahrmanövers 5 bestimmt, wird kann dann mit den vorgegeben Randbedingungen 7 die zweite Dimension (z.B. Querrichtung) berechnet. Die Berechnungen gehen dabei immer von einem Punkt aus, der bewegt wird. Bei 2-Dimensionaler Bewegung muss die Fahrzeuggeometrie (Achsenauslegung, Lenkung, Ausrichtung des Fahrzeugs, etc.) berücksichtigt werden. In der Praxis kann zum Beispiel das Einspurmodel der Bremsregelfunktion ESC verwendet werden.

Das Verfahren ist ähnlich wie bei 2-Dimensionaler Bewegung auch auf 3-Dimensionale Bewegung erweiterbar.

Insgesamt zeigt das Beispiel, wie durch die Erfindung ein Modell und ein System zur Berechnung von Fahrmanövern für automatisierte Assistenzfunktionen bereitgestellt werden können.

### Bezugszeichenliste

- 1: Kraftfahrzeug
- 2: Straße
- 3: Fahrerassistenzeinrichtung
- 4: Längsrichtung
- 5: Fahrmanöver
- 6: Steuervorrichtung
- 7: Endbedingungen
- 8: Sensoreinrichtung
- 9: Sensordaten
- 10: Sollwertsignal
- 11: Steuereinrichtung
- 12: Reglereinrichtung
- 13: Stellsignal
- 14: Aktuatoreinrichtung
- 15: Modell
- 16: Verlaufsdaten
- 17: Zeitlicher Verlauf
- 18: Integration
- 19: Ruckkoeffizient

- A: Beschleunigung
- R: Ruck
- S: Strecke
- T: Manöverdauer
- V: Geschwindigkeit

## Patentansprüche

1. Verfahren zum Bereitstellen eines Sollwertsignals (10) für eine Fahrerassistenzeinrichtung (3) zum Führen eines Kraftfahrzeugs (1) entlang zumindest einer Bewegungsrichtung (4) während eines Fahrmanövers (5), wobei für jede Bewegungsrichtung (4) jeweils
- für zumindest einen Bewegungsparameter (R, A, V, S, T) des Kraftfahrzeugs (1) eine jeweilige Endbedingung (7), die der Bewegungsparameter (R, A, V, S, T) am Ende des Fahrmanövers (5) erfüllen soll, empfangen wird, und
- aktuelle Sensordaten (9) betreffend den zumindest einen Bewegungsparameter (R, A, V, S, T) empfangen werden, und
- auf der Grundlage der Sensordaten (9) für jeden Bewegungsparameter (R, A, V, S, T) jeweilige Verlaufsdaten (16), die jeweils einen zeitlichen Verlauf (17) des Bewegungsparameters (R, A, V, S, T) während des Fahrmanövers (5) beschreiben, ermittelt werden, wobei jeder Verlauf (17) die jeweilige Endbedingung (7) erfüllt und hierzu die jeweiligen Verlaufsdaten (16) gemeinsam anhand eines Modells (15) eines zeitlichen Verlaufs (17) eines Rucks (R), der eine zeitliche Ableitung einer Beschleunigung (A) des Kraftfahrzeugs (1) entlang der Bewegungsrichtung (4) beschreibt, ermittelt werden, und
- anhand der ermittelten Verlaufsdaten (16) das Sollwertsignal (10) erzeugt wird und das Sollwertsignal (10) der Fahrerassistenzeinrichtung (3) bereitgestellt wird, wobei das Modell (15) mehrere Ruckkoeffizienten (19) aufweist,
**dadurch gekennzeichnet, dass** in Abhängigkeit davon, für wie viele Bewegungsparameter (R, A, V, S, T) die jeweilige Endbedingung (7) empfangen wurde, einer oder einige der Ruckkoeffizienten (19) auf einen vorbestimmten Wert festgelegt wird, und
wobei das Sollwertsignal (10) für Bewegungsrichtungen (4) eines 2-dimensionalen oder eines 3-dimensionalen Fahrmanövers (5) bereitgestellt wird und zunächst für die eine der Bewegungsrichtungen (4) die Verlaufsdaten (16) ermittelt werden, daraus eine Manöverdauer (T) des Fahrmanövers (5) ermittelt wird und dann die Verlaufsdaten (16) für jede verbleibende der Bewegungsrichtungen (4) in Abhängigkeit von der Manöverdauer (T) ermittelt werden.

2. Verfahren nach Anspruch 1, wobei zu zumindest einem der folgenden Bewegungsparameter (R, A, V, S, T) die jeweilige Endbedingung empfangen wird: die Beschleunigung (A), eine Geschwindigkeit (V), eine Strecke (S), eine Manöverdauer (T), den Ruck (R).

3. Verfahren nach einem der vorhergehenden Ansprüche, wobei durch das Modell (15) der zeitliche Verlauf (17) des Rucks (R) als knickfreier Verlauf modelliert wird.

4. Verfahren nach einem der vorhergehenden Ansprüche, wobei der Fahrerassistenzeinrichtung (3) die jeweiligen Verlaufsdaten (16) des ermittelten zeitlichen Verlaufs (17) des zumindest einen Bewegungsparameters (R, A, V, S, T) und/oder Verlaufsdaten eines zeitlichen Verlaufs eines weiteren Bewegungsparameters und/oder ein Zeitwert einer Dauer (T) des Manövers bereitgestellt wird.

5. Verfahren nach Anspruch 1, wobei das Model (15) ein Polynom umfasst, welche den Ruck R(t) über der Zeit t mit den Ruckkoeffizienten R0, R1, R2, R3 und R4 beschreibt als R(t) = R0 + R1 t + R2 t² + R3 t³ + R4 t⁴.

6. Verfahren nach einem der vorhergehenden Ansprüche, wobei die Verlaufsdaten (16) zumindest einen der folgenden zeitlichen Verläufe (17) beschreiben: einen Beschleunigungsverlauf (A(t)), einen Geschwindigkeitsverlauf (V(t)), einen Streckenverlauf (S(t)), wobei jeder Verlauf (17) anhand einer vorbestimmten von dem Modell (15) abhängigen Bewegungsgleichung definiert ist.

7. Verfahren nach einem der vorhergehenden Ansprüche, wobei überprüft wird, ob die Verlaufsdaten (16) zumindest ein vorbestimmtes Plausibilitätskriterium verletzten, und bei verletztem Plausibilitätskriterium das Sollwertsignal (10) unterdrückt wird.

8. Verfahren nach Anspruch 7, wobei bei verletztem Plausibilitätskriterium die zumindest eine Endbedingung (7) verändert wird und neue Verlaufsdaten (16) ermittelt werden.

9. Verfahren nach einem der vorhergehenden Ansprüche, wobei die zumindest eine Bewegungsrichtung (4) eine Querrichtung für eine Querbewegung des Kraftfahrzeugs (1) umfasst und die Verlaufsdaten (16) für die Querbewegung für einen einzelnen Punkt des Kraftfahrzeugs (1) ermittelt werden und aus den Verlaufsdaten (16) das Sollwertsignal (10) mittels eines Einspurmodells des Kraftfahrzeugs (1) erzeugt wird.

10. Verfahren nach einem der vorhergehenden Ansprüche, wobei die Fahrerassistenzeinrichtung (3) eine jeweilige Reglereinrichtung (12) für einen Regelbetrieb einer jeweiligen Aktuatoreinrichtung (14) zum Führen des Kraftfahrzeug (1) entlang der jeweiligen Bewegungsrichtung (4) aufweist und wobei das bereitgestellte Sollwertsignals (10) in jeder Reglereinrichtung (12) eingestellt wird.

11. Steuervorrichtung (6) für ein Kraftfahrzeug (1), wobei die Steuervorrichtung (1) dazu eingerichtet ist, Sensordaten (9) betreffend zumindest einen Bewegungsparameter (R, A, V, S, T) einer Fahrzeugbewegung entlang zumindest einer Bewegungsrichtung (4) des Kraftfahrzeugs (1) und eine jeweilige Endbedingung (7), die der jeweilige Bewegungsparameter (R, A, V, S, T) am Ende eines Fahrmanövers (5) erfüllen soll, zu empfangen und auf der Grundlage der empfangenen Sensordaten (9) und jeder empfangenen Endbedingung (7) ein Verfahren nach einem der vorhergehenden Ansprüche durchzuführen.

12. Kraftfahrzeug (1) aufweisend:
- eine Sensoreinrichtung (8) zum Erzeugen von Sensordaten (9) betreffend zumindest einen Bewegungsparameter (R, A, V, S, T) einer Fahrzeugbewegung des Kraftfahrzeugs (1) entlang zumindest einer Bewegungsrichtung (4),
- zumindest eine Fahrerassistenzeinrichtung (3) zum Führen des Kraftfahrzeugs (1) entlang der zumindest einen Bewegungsrichtung (4) in einem Fahrmanöver (5), **dadurch gekennzeichnet, dass**
eine Steuervorrichtung (6) nach Anspruch 11 bereitgestellt ist und die zumindest Fahrerassistenzeinrichtung (3) dazu eingerichtet ist, zum Planen des Fahrmanövers (5) eine jeweilige Endbedingung (7) für den zumindest einen Bewegungsparameter (R, A, V, S, T) an die Steuervorrichtung (6) auszusenden und von der Steuervorrichtung (6) ein Sollwertsignal (10) für zumindest eine Reglereinrichtung (12) für einen Regelbetrieb einerjeweiligen Aktuatoreinrichtung (14) zum Führen des Kraftfahrzeugs (1) entlang der jeweiligen Bewegungsrichtung (4) zu empfangen und das Sollwertsignal (10) in jeder Reglereinrichtung (12) einzustellen, wobei die Steuervorrichtung (6) dazu eingerichtet ist, das Sollwertsignal (10) für Bewegungsrichtungen (4) eines 2-dimensionalen oder eines 3-dimensionalen Fahrmanövers (5) bereitzustellen und zunächst für die eine der Bewegungsrichtungen (4) die Verlaufsdaten (16) zu ermitteln, daraus eine Manöverdauer (T) des Fahrmanövers (5) zu ermitteln und dann die Verlaufsdaten (16) für jede verbleibende der Bewegungsrichtungen (4) in Abhängigkeit von der Manöverdauer (T) zu ermitteln.

## Claims

1. A method for providing a set-point signal (10) for a driver assistance device (3) for driving a motor vehicle (1) along at least one direction of movement (4) during a driving maneuver (5), wherein for each direction of movement (4) in each case
- for at least one movement parameter (R, A, V, S. T) of the motor vehicle (1) a respective termination condition (7), which should fulfill the movement parameter (R, A, V, S, T) at the end of the driving maneuver (5), is received, and
- current sensor data (9) concerning the at least one movement parameter (R, A, V, S, T) are received, and
- on the basis of the sensor data (9) for each movement parameter (R, A, V, S, T) respective history data (16), which in each case describe a temporal course (17) of the movement parameters (R, A, V, S, T) during the driving maneuver (5), are determined, wherein each course (17) fulfills the respective termination condition (7) and for this purpose the respective history data (16) are determined jointly by means of a model (15) of a temporal course (17) of a jerk (R), which describes a temporal derivation of an acceleration (A) of the motor vehicle (1) along the direction of movement (4), and
- by means of the determined history data (16) the set-point signal (10) is generated and the set-point signal (10) is provided to the driver assistance device (3), wherein the model (15) has several jerk coefficients (19),
**characterized in that**
depending on for how many movement parameters (R, A, V, S, T) the respective termination condition (7) has been received, one or a number of the jerk coefficients (19) is set to a predetermined value, and
wherein the set-point signal (10) for directions of movement (4) of a 2-dimensional or a 3-dimensional driving maneuver (5) is provided and initially the history data are determined for the one of directions of movement (4), from which a duration of maneuver (T) of the driving maneuver (5) is determined and then the history data (16) for each of the remaining directions of movement (4) are determined depending on the duration of the maneuver (T).

2. A method according to Claim 1, wherein for at least one of the following movement parameters (R, A, V, S, T) the respective termination condition is received: the acceleration (A), a velocity (V), a distance (S), a duration of maneuver (T), the jerk (R).

3. A method according to any one of the preceding claims, wherein the temporal course (17) of the jerk (R) is modeled by the model (15) as a kink-free course.

4. A method according to any one of the preceding claims, wherein the driver assistance device (3) is provided the respective history data (16) of the determined temporal course (17) of the at least one movement parameter (R, A, V, S, T) and/or history data of a temporal course of a further movement parameter and/or a time value of a duration (T) of the maneuver.

5. A method according to Claim 1, wherein the model (15) comprises a polynomial, which describes the jerk R(t) over time t with the jerk coefficients R0, R1, R2, R3 and R4 as R(t) = R0 + R1 t + R2 t² = R3 t³ = R4 t⁴.

6. A method according to any one of the preceding claims, wherein the history data (16) describe at least one of the following temporal courses (17): an acceleration course (A(t)), a velocity course (V(t)), a distance course (S(t)), wherein each course (17) is defined by means of a predetermined equation of movement dependent on the model (15).

7. A method according to any one of the preceding claims, wherein it is checked whether the history data (16) violates at least one predetermined plausibility criterion, and if a plausibility criterion is violated the set-point signal (10) is suppressed.

8. A method according to Claim 7, wherein if a plausibility criterion is violated the at least one termination condition (7) is changed and new history data (16) are determined.

9. A method according to any one of the preceding claims, wherein the at least one direction of movement (4) comprises a transverse direction for a transverse movement of the motor vehicle (1) and the history data (16) are determined for the transverse movement for a single point of the motor vehicle (1) and from the history data (16) the set-point signal (10) is generated by means of a single-track model of the motor vehicle (1).

10. A method according to any one of the preceding claims, wherein the driver assistance device (3) has a respective controller means (12) for a control operation of a respective actuator device (14) guiding the motor vehicle (1) along the respective direction of movement (4) and wherein the provided set-point signal (10) is set in each controller means (12).

11. A control device (6) for a motor vehicle (1), wherein the control device (1) is configured to receive sensor data (9) concerning at least one movement parameter (R, A, V, S, T) of a vehicle movement along at least one direction of movement (4) of the motor vehicle (1) and a respective termination condition (7), which should fulfill the respective movement parameter (R, A, V, S, T) at the end of a driving maneuver (5), and on the basis of the received sensor data (9) and each received termination condition (7) to carry out a method according to any one of the preceding claims.

12. A motor vehicle (1) having:
- a sensor device (8) for generating sensor data (9) concerning at least one movement parameter (R, A, V, S, T) of a vehicle movement of the motor vehicle (1) along a least one direction of movement (4),
- at least one driver assistance device (3) for guiding the motor vehicle (1) along the at least one direction of movement (4) in a driving maneuver (5),
**characterized in that**
a control device (6) according to Claim 11 is provided and the at least one driver assistance device (3) is configured for planning the driving maneuver (5) to transmit a respective termination condition (7) for the at least one movement parameter (R, A, V, S, T) to the control device (6) and to receive from the control device (6) a set-point signal (10) for at least one controller means (12) for a control operation of a respective actuator device (14) for guiding the motor vehicle (1) along the respective direction of movement (4) and to set the set-point signal (10) in each controller means (12), wherein the control device (6) is configured to provide the set-point signal (10) for directions of movement (4) of a 2-dimensional or a 3-dimensional driving maneuver (5) and initially to determine the history data (16) for the one of the directions of movement (4), from which to determine the maneuver duration (T) of the driving maneuver (5) and then to determine the history data (16) for each of the remaining directions of movement (4) depending on the maneuver duration (T).

## Revendications

1. Procédé de fourniture d'un signal de valeur de seuil (10) pour un système d'aide à la conduite (3) pour la conduite d'un véhicule automobile (1) le long d'au moins une direction de déplacement (4) pendant une manoeuvre (5), dans lequel, pour chaque direction de déplacement (4), à chaque fois
- pour au moins un paramètre de déplacement (R, A, V, S, T) du véhicule automobile (1), une condition de fin (7) respective que doit respecter le paramètre de déplacement (R, A, V, S, T) à la fin de la manoeuvre (5) est reçue, et
- des données de capteur (9) actuelles concernant le paramètre de déplacement (R, A, V, S, T) au moins au nombre de un sont reçues, et
- sur la base des données de capteur (9) pour chaque paramètre de déplacement (R, A, V, S, T), des données d'allure (16) respectives qui décrivent respectivement une allure (17) dans le temps du paramètre de déplacement (R, A, V, S, T) pendant la manoeuvre (5) sont déterminées, chaque allure (17) respectant la condition de fin (7) respective, et pour cela les données d'allure (16) respectives sont déterminées conjointement à l'aide d'un modèle (15) d'une allure (17) dans le temps d'une saccade (R) qui décrit une dérivée dans le temps d'une accélération (A) du véhicule automobile (1) le long de la direction de déplacement (4), et
- à l'aide des données d'allure (16) déterminées, le signal de valeur de seuil (10) est produit, et le signal de valeur de seuil (10) du système d'aide à la conduite (3) est fourni, le modèle (15) comportant plusieurs coefficients de saccade (19),
**caractérisé en ce que**,
selon le nombre de paramètres de déplacement (R, A, V, S, T) pour lesquels la condition de fin (7) respective a été reçue, un ou quelques-uns des coefficients de saccade (19) est fixé à une valeur prédéfinie, et
le signal de valeur de seuil (10) étant fourni pour des directions de déplacement (4) d'une manoeuvre (5) dans 2 dimensions ou dans 3 dimensions, et d'abord les données d'allure (16) sont déterminées pour l'une des directions de déplacement (4), une durée de manoeuvre (T) de la manoeuvre (5) est déterminée à partir de cela, et puis les données d'allure (16) pour chaque direction restante des directions de déplacement (4) sont déterminées en fonction de la durée de manoeuvre (T).

2. Procédé selon la revendication 1, la condition de fin respective étant reçue pour au moins un des paramètres de déplacement (R, A, V, S, T) suivants : l'accélération (A), une vitesse (V), un parcours (S), une durée de manoeuvre (T), la saccade (R).

3. Procédé selon l'une des revendications précédentes, l'allure (17) dans le temps de la saccade (R) étant modélisé par le modèle (15) en tant qu'allure sans coude.

4. Procédé selon l'une des revendications précédentes, les données d'allure (16) respectives de l'allure (17) dans le temps déterminée du paramètre de déplacement (R, A, V, S, T) au moins au nombre de un et/ou des données d'allure d'une allure dans le temps d'un autre paramètre de déplacement et/ou une valeur de temps d'une durée de manoeuvre (T) de la manoeuvre étant fournies au système d'aide à la conduite (3).

5. Procédé selon la revendication 1, le modèle (15) comprenant un polynôme qui décrit la saccade R(t) en fonction du temps t avec les coefficients de saccade R0, R1, R2, R3 et R4 en tant que R(t) = R0 + R1 t+ R2 t² + R3 t³ + R4 t⁴.

6. Procédé selon l'une des revendications précédentes, les données d'allure (16) décrivant au moins l'une des allures (17) dans le temps suivantes: une allure d'accélération (A(t)), une allure de vitesse (V(t)), une allure de parcours (S(t)), chaque allure (17) étant définie à l'aide d'une équation de déplacement prédéfinie qui est fonction du modèle (15).

7. Procédé selon l'une des revendications précédente, dans lequel il est vérifié si les données d'allure (16) ont violé au moins un critère de vraisemblance prédéfini, et le signal de valeur de seuil (10) est empêché en cas de violation du critère de vraisemblance.

8. Procédé selon la revendication 7, dans lequel, en cas de violation du critère de vraisemblance, la condition de fin (7) au moins au nombre de un est modifiée, et des nouvelles données d'allure (16) sont déterminées.

9. Procédé selon l'une des revendications précédentes, dans lequel la direction de déplacement (4) au moins au nombre de un comprend une direction transversale pour un déplacement transversal du véhicule automobile (1), et les données d'allure (16) pour le déplacement transversal sont déterminées pour un point individuel du véhicule automobile (1), et le signal de valeur de seuil (10) est produit à partir des données d'allure (16) au moyen d'un modèle monovoie du véhicule automobile (1).

10. Procédé selon l'une des revendications précédentes, le système d'aide à la conduite (3) comportant un système de régulation (12) respectif pour un mode de régulation d'un système d'actionneur (14) respectif pour la conduite du véhicule automobile (1) le long de la direction de déplacement (4) respective, et le signal de valeur de seuil (10) fourni étant réglé dans chaque système de régulation (12).

11. Dispositif de commande (6) pour un véhicule automobile (1), le dispositif de commande (1) étant agencé pour recevoir des données de capteur (9) concernant au moins un paramètre de déplacement (R, A, V, S, T) d'un déplacement de véhicule le long d'au moins une direction de déplacement (4) du véhicule automobile (1) et une condition de fin (7) respective que le paramètre de déplacement (R, A, V, S, T) respectif doit respecter à la fin d'une manoeuvre (5), et pour effectuer un procédé selon l'une des revendications précédentes sur la base des données de capteur (9) reçues et de chaque condition de fin (7) reçue.

12. Véhicule automobile, présentant :
- un système de capteur (8) destiné à la production de données de capteur (9) concernant au moins un paramètre de déplacement (R, A, V, S, T) d'un déplacement de véhicule du véhicule automobile (1) le long d'au moins une direction de déplacement (4),
- au moins un système d'aide à la conduite (3) destiné à la conduite du véhicule automobile (1) le long de la direction de déplacement (4) au moins au nombre de un dans une manoeuvre (5),
**caractérisé en ce**
**qu'**un dispositif de commande (6) selon la revendication 11 est fourni, et le système d'aide à la conduite (3) au moins au nombre de un est agencé pour envoyer au dispositif de commande (6), pour la planification de la manoeuvre (5), une condition de fin (7) respective pour le paramètre de déplacement (R, A, V, S, T) au moins au nombre de un, et pour recevoir de la part du dispositif de commande (6) un signal de valeur de seuil (10) pour au moins un système de régulation (12) pour un mode de régulation d'un système d'actionneur (14) respectif pour la conduite du véhicule automobile (1) le long de la direction de déplacement (4) respective, et pour régler le signal de valeur de seuil (10) dans chaque système de régulation (12), le dispositif de commande (6) étant agencé pour fournir le signal de valeur de seuil (10) pour des directions de déplacement (4) d'une manoeuvre (5) dans 2 dimensions ou dans 3 dimensions, et pour déterminer d'abord les données d'allure (16) pour l'une des directions de déplacement (4), pour déterminer à partir de cela une durée de manoeuvre (T) de la manoeuvre (5) et puis pour déterminer les données d'allure (16) pour chaque direction restante des directions de déplacement (4) en fonction de la durée de manoeuvre (T).
